# EUROPÄISCHE PATENTSCHRIFT

(11) **EP 3 622 709 B1**
(45) Veröffentlichungstag und Bekanntmachung des Hinweises auf die Patenterteilung: **05.11.2025**
(21) Anmeldenummer: 18718763.8
(22) Anmeldetag: 10.04.2018
(51) Int. Cl.: H04N 7/18, G02B 27/01, G06F 3/01

(54) **VERFAHREN UND VORRICHTUNG ZUR ORTSAUFGELÖSTEN DETEKTION VON EINEM FAHRZEUGEXTERNEN OBJEKT MITHILFE EINES IN EINEM FAHRZEUG VERBAUTEN SENSORS**
METHOD AND APPARATUS FOR THE SPATIALLY RESOLVED DETECTION OF AN OBJECT OUTSIDE A VEHICLE WITH THE AID OF A SENSOR INSTALLED IN A VEHICLE
PROCÉDÉ ET DISPOSITIF DE DÉTECTION À RÉSOLUTION SPATIALE D'UN OBJET EXTERNE À UN VÉHICULE À L'AIDE D'UN CAPTEUR INTÉGRÉ DANS UN VÉHICULE

(30) Priorität: 11.05.2017 DE 102017207960
(43) Veröffentlichungstag der Anmeldung: 18.03.2020
(73) Patentinhaber: Volkswagen Aktiengesellschaft, 38440 Wolfsburg (DE)
(72) Erfinder: GEHRLING, Sebastian, 45357 Essen (DE); KAMPERMANN, Jens, 42781 Haan (DE); STRYGULEC, Sarah, 42105 Wuppertal (DE); KLOMP, Sven, 31311 Uetze / Dollbergen (DE); APFEL, Jessica, 33102 Paderborn (DE); JÜRGENSMEIER, Sandra, 33129 Delbrück (DE); THEIMER, Wolfgang, 44879 Bochum (DE); ZIELINSKI, Ernst, 44803 Bochum (DE); KÖSE, Esref, 44793 Bochum (DE); ALI, Ahmed, 44801 Bochum (DE)
(86) Internationale Anmeldenummer: PCT/EP2018/059209
(87) Internationale Veröffentlichungsnummer: WO 2018/206213

(56) Entgegenhaltungen:
- DE-A1- 102011 084 217
- DE-A1- 102014 109 079
- US-A1- 2012 089 321

## Beschreibung

Die vorliegende Erfindung betrifft ein Verfahren zur ortsaufgelösten Detektion von einem fahrzeugexternen Objekt mithilfe eines in einem Fahrzeug verbauten Sensors. Die vorliegende Erfindung betrifft weiterhin eine Vorrichtung zur Durchführung des Verfahrens und ein Fahrzeug, das eingerichtet ist, ein solches Verfahren auszuführen oder eine solche Vorrichtung aufweist.

Mittlerweile sind eine Vielzahl verschiedenartiger Fahrerassistenzsysteme bekannt, die in Kraftfahrzeugen den Fahrer unterstützen können. Teilweise beschränken sich die Fahrerassistenzsysteme lediglich auf Signalisierungs- bzw. Warnfunktionen, teilweise greifen diese aber auch in den Antrieb oder die Steuerung des Fahrzeugs ein. Beides setzt eine Kenntnis der aktuellen Fahrzeugsituation voraus, die basierend auf Daten von geeigneten Sensoren gewonnen wird. Die Sensoren können hierbei technische Parameter des Fahrzeugs selber, wie z. B. für ein Fahrstabilisierungsystem (ESP) oder Antiblockiersystem (ABS), aber auch Informationen über das Fahrzeugumfeld ermitteln. Für die Beobachtung des Fahrzeugumfelds und darauf basierende Assistenzfunktionen wie Einparkhilfen, automatische Abstandswarnungen und -regelungen, Verkehrszeichenerkennungen, Totwinkel-Überwachungen oder Notbremssysteme zum Fußgängerschutz kommen hierbei verschiedene Techniken, häufig auch in Kombination, zum Einsatz. Besonders häufig werden Ultraschall-, Radar-, Lidar- und Kamerasysteme verwendet um Objekte im Umfeld des Fahrzeugs, wie Fußgänger, andere Fahrzeuge, Verkehrsschilder etc. zu identifizieren. Hierbei können die Sensordaten mehrerer Sensoren zunächst einzeln ausgewertet werden, in diesen jeweiligen Sensordaten Objekte im Umfeld des Fahrzeugs identifiziert werden und dann die von den verschiedenen Sensoren bereitgestellten Informationen zu den erkannten Objekten zu einem umfassenden Umfeldmodell zusammengefasst werden.

Die Zusammenfassung bzw. Verknüpfung der Ausgabedaten mehrerer Sensoren, auch als Sensordatenfusion bezeichnet, erfolgt mit dem Ziel die Qualität der gewonnenen Informationen zu verbessern, sei es um den Detektionsbereich zu vergrößern oder die Detektion und ggfs. Klassifikation von Objekten genauer oder verlässlicher zu gestalten. Sind beispielsweise die gewonnenen Informationen eines oder mehrerer Sensoren nicht verlässlich, so kann sich dieses mittels Daten weiterer Sensoren teilweise oder vollständig ausgleichen lassen. Ebenso können aber auch mittels Daten weiterer Sensoren bereits vorhandene Informationen bestätigen werden.

Ein weiterer Ansatz zur Optimierung der Erfassung von Objekten im Fahrzeugumfeld und Modellierung des Fahrzeugumfelds besteht darin bei der Auswertung der Sensorsignale eine oder mehrere Interessensbereiche, in denen relevante Informationen vermutet werden, festzulegen. Werden diese Interessensbereiche, auch als Regions of Interest (ROls) bezeichnet, geeignet gewählt, lassen sich Fehldetektionen reduzieren, die Robustheit des Systems erhöhen und Entscheidungsvorgänge beschleunigen. So können beispielsweise bei Bildsignalen einer Kamera die Bilddaten zunächst nach Interessensbereichen durchsucht werden, die dann im Folgenden einer genaueren Bildverarbeitung und Objekterkennung unterzogen werden. Hierbei ist es bekannt Tracking-Verfahren anzuwenden, bei denen erkannte Objekte zeitlich anhand von Modellen verfolgt werden und so Interessensbereiche für zukünftige Zeitpunkte vorherzusagen. Um ein neues Objekt verfolgen zu können, muss hierfür zunächst jedoch eine Initialisierung erfolgen.

Ein Verfahren zum Erstellen eines Umfeldmodells für ein Fahrzeug ist aus der DE 10 2013 201 545 A1 bekannt. Hierbei werden Sensordaten mehrerer Sensoren ausgewertet um Objekte zu erkennen, wobei auch ein oder mehrere Interessensbereiche im einem Umfeldmodell ermittelt werden und für die Erkennung eines Objektes oder einer Eigenschaft des Objektes verwendet werden. DE 10 2014 109079 A1 beschreibt eine Vorrichtung und ein Verfahren zum Nachweis des Interesses eines Fahrers an einer visuellen Werbeanzeige durch die Verfolgung der Blickrichtung des Fahrers, damit eine Audiowerbebotschaft für den Fahrer abgespielt werden kann, die allgemein mit der visuellen Anzeige verbunden wird.

Es ist eine Aufgabe der Erfindung, ein verbessertes Verfahren zur ortsaufgelösten Detektion von einem fahrzeugexternen Objekt mithilfe eines in einem Fahrzeug verbauten Sensors zur Verfügung zu stellen.

Diese Aufgabe wird durch ein Verfahren mit den Merkmalen des Anspruchs 1, sowie durch eine entsprechende Vorrichtung gemäß Anspruch 7 gelöst. Bevorzugte Ausgestaltungen der Erfindung sind Gegenstand der abhängigen Ansprüche.

Bei dem erfindungsgemäßen Verfahren zur ortsaufgelösten Detektion von einem fahrzeugexternen Objekt mithilfe eines in einem Fahrzeug verbauten Sensors wird die Blickrichtung eines Fahrzeuginsassen erfasst. Die erfasste Blickrichtung wird über einen Zeitraum analysiert und hieraus ein Interessensbereich außerhalb des Fahrzeugs bestimmt. Der Sensor wird daraufhin in Richtung des bestimmten Interessensbereichs räumlich sensibilisiert und/oder ausgerichtet.

Dieses verbessert sowohl die Bestimmung von Interessensbereichen außerhalb des Fahrzeugs als auch die Initialisierung des Trackings eines neu zu verfolgenden Objekts. Ebenso stellt dieses bei mehreren erkannten Objekten eine Information darüber zur Verfügung, welches der Objekte für den Fahrzeuginsassen Priorität hat.

Gemäß einer Ausführungsform der Erfindung wird neben der Blickrichtung des Fahrzeuginsassen auch die Konvergenz der Augen des Fahrzeuginsassen ermittelt um die räumliche Entfernung des Interessensbereichs zu ermitteln. Damit kann der Sensor zur Detektion des fahrzeugexternen Objekts noch genauer sensibilisiert bzw. ausgerichtet werden.

Gemäß einer weiteren Ausführungsform der Erfindung wird ein Konfidenzwert für einen räumlichen Bereich ermittelt, wobei der Konfidenzwert von der Dauer und/oder Häufigkeit der Betrachtung durch den Fahrzeuginsassen abhängt. Der räumliche Bereich wird als ein Interessensbereich bestimmt, wenn der Konfidenzwert einen Schwellwert überschreitet. Mit einem solchen Konfidenzwert lässt sich die Erfassung der Blickrichtung besonders gut quantifizieren und damit die Bestimmung eines Interessenbereiches besonders verlässlich gestalten.

Vorteilhafterweise hängt der Schwellwert vom physischen oder mentalen Zustand des Fahrzeuginsassen und/oder fahrzeugexternen Parametern wie Straßen-, Verkehrs- oder Wetterverhältnissen ab. Damit lässt sich die Bestimmung eines Interessenbereiches auf veränderte Parameter anpassen so dass die Zuverlässigkeit weiter gesteigert wird.

Gemäß einer weiteren Ausführungsform der Erfindung wird der Interessenbereich oder ein Objekt, dass sich in dem Interessenbereich befindet, dem Fahrzeuginsassen durch eine Anzeige, beispielsweise durch einen projizierten Rahmens um den Interessenbereich oder das Objekt, kenntlich gemacht. Auf diese Weise kann dem Fahrzeuginsassen verdeutlicht werden, dass das betrachtete Objekt erfasst wurde und von der Fahrzeugsensorik und ggfs. einem Assistenzsystem berücksichtigt wird und damit das Vertrauen in das Assistenzsystem erhöhen.

Besonders vorteilhaft kann das Verfahren angewendet werden wenn die Blickrichtung des Fahrer des Fahrzeug erfasst wird, da dieser die Fahrzeugumgebung am aufmerksamsten betrachtet um das Fahrzeug sicher führen zu können. Ferner weiß der Fahrer in welche Richtung er das Fahrzeug lenken wird und damit auch in welcher Richtung fahrzeugexterne Objekte besonders relevant sind, weil sie beispielsweise die zukünftige Fahrzeugtrajektorie kreuzen könnten. Schließlich sind Kamerasysteme, die die Augen des Fahrers erfassen, ggfs. schon im Fahrzeug vorgesehen, um beispielsweise eine auftretende Fahrermüdigkeit zu detektieren und hierauf zu reagieren und können damit ohne zusätzliche Kosten für ein weiteres Kamerasystem auch für die Erfindung genutzt werden.

Entsprechend umfasst eine erfindungsgemäße Vorrichtung zur ortsaufgelösten Detektion von einem fahrzeugexternen Objekt mithilfe eines in einem Fahrzeug verbauten ersten Sensors,
- einen zweiten Sensor zur Erfassung der Blickrichtung eines Fahrzeuginsassen;
- eine Auswerte-und Steuereinheit, der Sensordaten des zweiten Sensors über die erfasste Blickrichtung zugeführt werden und die die Sensordaten über einen Zeitraum analysiert und hieraus einen Interessensbereich außerhalb des Fahrzeugs bestimmt und den ersten Sensor so ansteuert, dass dieser in Richtung des bestimmten Interessensbereichs räumlich sensibilisiert und/oder ausgerichtet wird.

Vorzugsweise ist der erste Sensor ein auf das Fahrzeugumfeld ausgerichteter Kamera-, Radar-, Lidar- oder Ultraschallsensor und der zweite Sensor ein im Fahrzeug auf den Fahrzeuginsassen ausgerichteter Kamerasensor.

Vorteilhafterweise ist hierbei eine Anzeigevorrichtung, beispielsweise ein Head-Up-Display, in dem Fahrzeug angeordnet mittels der der Interessenbereich oder ein Objekt, dass sich in dem Interessenbereich befindet, dem Fahrzeuginsassen kenntlich gemacht wird.

Vorzugsweise wird das erfindungsgemäße Verfahren oder die erfindungsgemäße Vorrichtung in einem Kraftfahrzeug eingesetzt.

Weitere Merkmale der vorliegenden Erfindung werden aus der nachfolgenden Beschreibung und den Ansprüchen in Verbindung mit den Figuren ersichtlich.
- Fig. 1: zeigt schematisch das erfindungsgemäße Verfahren zur Optimierung von Fahrzeugsensoren basierend auf der erfassten Blickrichtung eines Fahrzeuginsassen;
- Fig. 2: zeigt die Anwendung der Erfindung am Beispiel einer Verkehrskreuzung, bei der ein Objekt noch nicht von der Fahrzeugsensorik erfasst wird aber dem System aufgrund der Betrachtung durch den Fahrer bereits bekannt ist; und
- Fig. 3: zeigt die Anwendung der Erfindung am Beispiel einer Verkehrssituation mit schlechten Wetterverhältnissen; und
- Fig. 4: zeigt schematisch ein Blockschaltbild einer erfindungsgemäßen Vorrichtung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

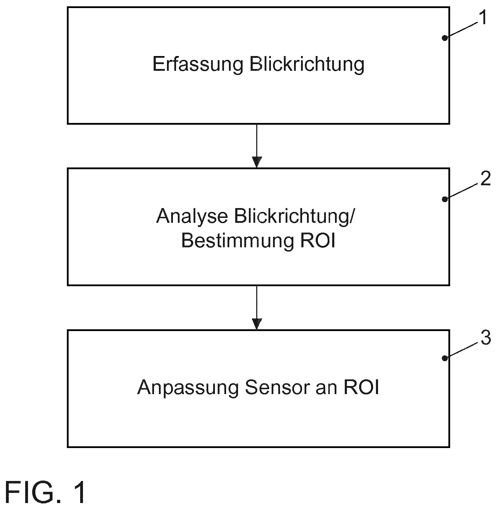

Figur 1 zeigt schematisch das erfindungsgemäße Verfahren zur ortsaufgelösten Detektion von einem fahrzeugexternen Objekt mithilfe eines in einem Fahrzeug verbauten Sensors. Gemäß Verfahrensschritt 1 erfolgt eine Erfassung der Blickrichtung eines Fahrzeuginsassen, insbesondere des Fahrer eines Fahrzeuges. Hierfür wird mittels eines Eye-Tracking-Verfahrens die Augenposition, die Blickrichtung des Fahrzeuginsassen und ggfs. auch die Konvergenz der Augen des Fahrzeuginsassen ermittelt und daraus eine Position außerhalb des Fahrzeugs abgeleitet. Die erfasste Blickrichtung wird in einem Verfahrensschritt 2 über einen gewissen Zeitraum analysiert. Ergibt sich hierbei, dass der Fahrzeuginsasse über diesen Zeitraum fortgesetzt einen bestimmten fahrzeugexternen Bereich betrachtet oder einem Objekt, wie z.B. einem vorrausfahrenden Fahrzeug, folgt so wird dieser Bereich als Interessensbereich (ROI) für die Sensorik festgelegt, da ein Bereich, dem der Fahrzeuginsasse seine Aufmerksamkeit widmet, mit einer hohen Wahrscheinlichkeit Informationen enthält, die auch für die Sensorik zur Beobachtung des Außenbereichs von Bedeutung sind. Daraufhin wird in Verfahrensschritt 3 der Sensor in Richtung des bestimmten Interessensbereichs (ROI) räumlich sensibilisiert und/oder ausgerichtet.

Der Fahrzeuginsasse kann ein Objekt bereits beobachten, bevor es in den Erkennungsbereich der vorhandenen Sensoren gelangt. Dadurch ist dieser Bereich schon vorher als Interessensbereich (ROI) für die Sensorik bekannt, so dass ein Objekt in diesem Bereich dann durch die Sensoren unmittelbar erkannt werden kann, wenn es in den Erkennungsbereich gelangt.

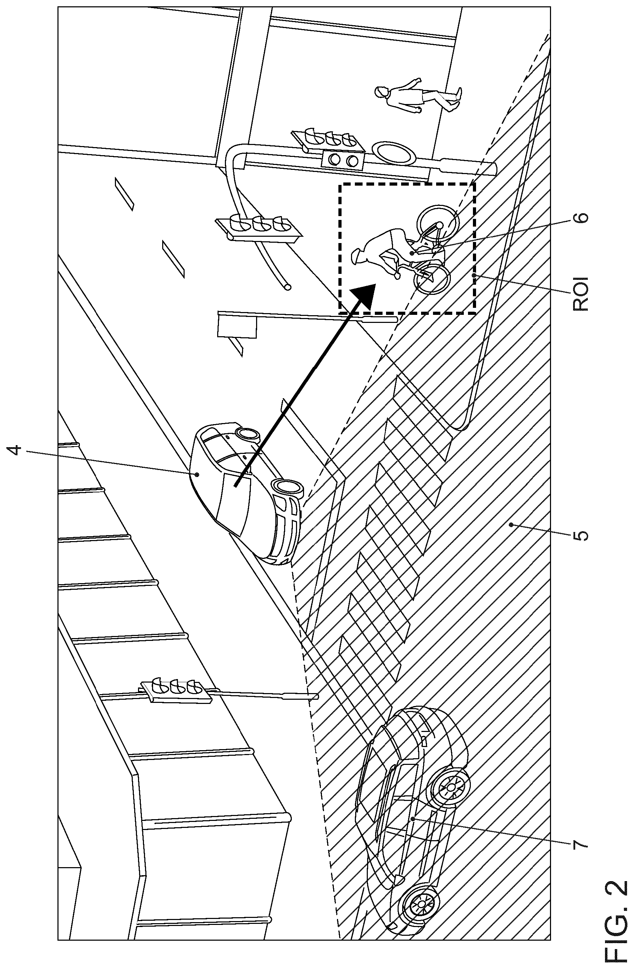

Dieses ist zur Veranschaulichung in Figur 2 dargestellt. Ein Eigenfahrzeug 4 mit geeigneter Sensorik zur Erfassung des Fahrzeugumfelds befindet sich an einer Kreuzung, wobei der Erkennungsbereich 5 der Sensorik schraffiert dargestellt ist. Ein vorbeifahrendes Fahrzeug 7 befindet sich in diesem Erkennungsbereich und wird daher von der Sensorik des Eigenfahrzeugs 4 erkannt. Ein Radfahrer 6 dagegen befindet sich noch nicht im Erkennungsbereich. Konzentriert der Fahrer seinen Blick jedoch auf diesen Radfahrer, beispielsweise um sich zu vergewissern, ob dieser die Fahrbahn vor dem Eigenfahrzeug überquert, so wird dieses erfindungsgemäß erfasst und an die Aussensensorik ein Interessenbereich ROI im Bereich des Radfahrers weitergeleitet. Damit ist der Aussensensorik bereits vor der eigentlichen Erfassung bekannt, dass sich im Interessenbereich ROI ein relevantes Objekt befindet.

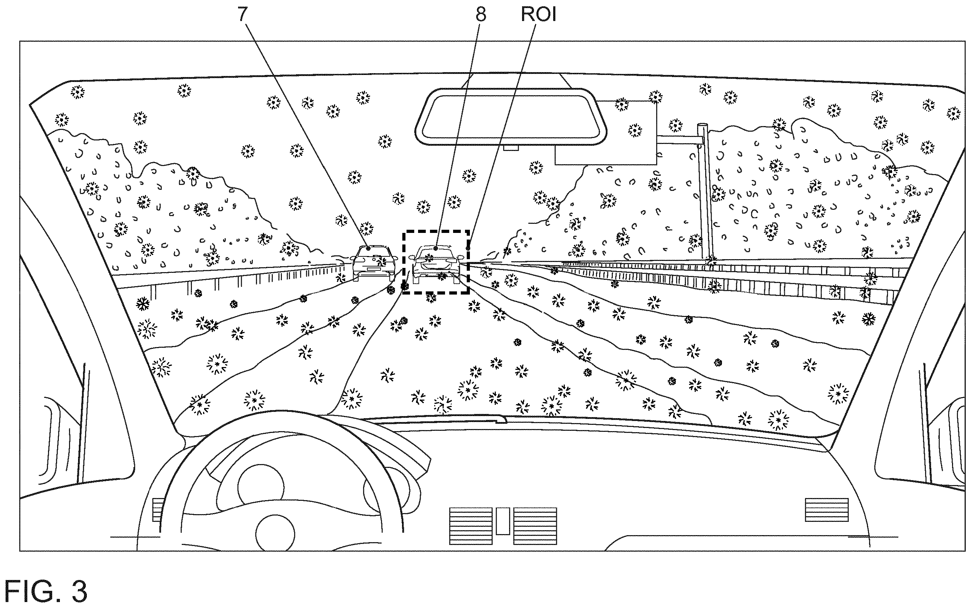

Figur 3 zeigt ein weiteres Szenario bei dem die erfasste Blickrichtung des Fahrzeuginsassen zur Optimierung der Erfassung des Fahrzeugumfeldes eingesetzt werden kann. Hierbei kommt es aufgrund schlechter Sichtverhältnissen zu widersprüchlichen Hypothesen über die Anwesenheit von Objekten zwischen einem Radar- und einem Kamerasensorsystem. Während das Radarsensorsystem das Fahrzeug 8, welches sich vor dem Eigenfahrzeug in der gleichen Fahrspur befindet, detektiert, erkennt das Kamerasensorsystem nur das sich links daneben befindliche Fahrzeug 7. Für gewisse Assistenzsysteme kann es nun erforderlich sein, dass sich das Assistenzsystem dennoch für eine Hypothese entscheidet obwohl die Interpretation der Umfeldbeobachtungen basierend auf den Sensordaten nicht eindeutig ist. Dieses kann durch die Auswertung der Blickrichtung des Fahrers optimiert werden. Wenn der Fahrer seinen Blick zu einem Großteil der Zeit auf das vor ihm fahrende Fahrzeug 8 konzentriert, wird die Hypothese des Radars unterstützt.

Die Auswertung der Blickrichtung kann weiterhin vorteilhaft sein um bei mehreren von der Fahrzeugsensorik erkannten Objekten diese zu priorisieren. Wenn die erkannten Objekte für die Fahrzeugsensorik die gleiche Relevanz haben sollten, von dem Fahrer aber nur eines dieser Objekte betrachtet wird oder deutlich länger betrachtet wird als die anderen erkannten Objekte, so kann darauf geschlossen werden, dass dieses Objekt aus Sicht des Fahrers besonders relevant ist.

Dieses kann insbesondere von Interesse sein, wenn Sensoren verwendet werden, die verschiedene erkannte Objekte nicht unterscheiden können. So kann etwa ein Radar- oder Lidarsystem - im Gegensatz zu einer Kamera mit nachgelagerten Algorithmen zur Bildauswertung - nicht unterscheiden, ob ein Objekt am Straßenrand feststehend ist, wie beispielsweise ein Verkehrszeichen oder ein Mülleimer, oder möglicherweise droht sich auf die Straße zu bewegen, wie beispielsweise bei einem Radfahrer oder einem spielenden Kind.

Aber auch wenn eine Kamera zur Erfassung des Fahrzeugumfelds eingesetzt wird, kann die Auswertung der Blickrichtung des Fahrzeuginsassen von Vorteil sein, da die Bildauswertung insbesondere bei hochauflösenden Kameras mit ausreichender Bildwiederholrate aufgrund des sich ergebenden Videodatenvolumens sehr aufwendig und damit in Echtzeit sehr kostenintensiv ist. Durch die Auswertung der Blickrichtung des Fahrzeuginsassen ist es dagegen möglich, die Bildanalyse auf die Bildpunkte in einem der Blickrichtung entsprechenden Interessenbereich zu beschränken.

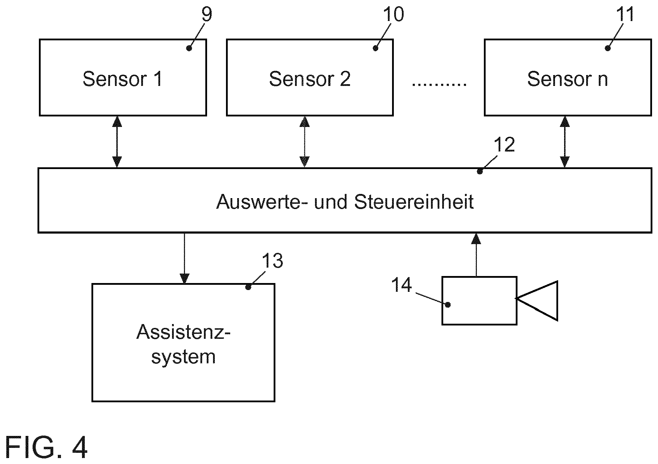

Figur 4 zeigt schematisch ein Blockschaltbild einer erfindungsgemäßen Vorrichtung. Mehrere in einem Fahrzeug verbaute Sensoren 9, 10, 11 sind zur Erfassung des Fahrzeugumfeldes vorgesehen, beispielsweise Kamera-, Radar-, Lidar- und/oder Ultraschallsensoren. Die Sensordaten werden einer Auswerte- und Steuereinheit 12 zugeführt, in der die Sensordaten ausgewertet werden um in Abhängigkeit davon ein Fahrerassistenzsystem 13 ansteuern zu können. Zusätzlich ist ein weiterer Sensor 14 im Fahrzeug vorgesehen, der die Blickrichtung eines Fahrzeuginsassen erfasst. Insbesondere kann mittels einer im Fahrzeuginnenraum angeordneten Kamera die Kopfposition des Fahrers erfasst und durch geeignete Bildanalyseverfahren die Augenposition und Blickrichtung des Fahrers ermitteln werden. Vorzugsweise handelt es sich hierbei um eine NIR-Kamera (englisch: near infrared, NIR), die sich an den sichtbaren Bereich unmittelbar anschließende kurzwellige Infrarotstrahlung erfasst. In diesem Fall kann eine Beleuchtung, insbesondere im Dunkeln, durch eine oder mehrere nicht dargestellte NIR-LEDs erfolgen, ohne dass dieses für den Fahrer störend ist oder ihn blenden kann. Die NIR-Kamera und die NIR-LEDs können separat oder aber auch in einem gemeinsamen Sensorbauteil verbaut werden. Die erfasste Blickrichtung wird in der Auswerte- und Steuereinheit 12 über einen gewissen Zeitraum analysiert, hieraus ein Interessensbereich außerhalb des Fahrzeugs ermittelt und basierend darauf mindestens einer der Sensoren 9, 10, 11 in Richtung dieses Interessensbereichs räumlich sensibilisiert und/oder ausgerichtet.

Befindet sich lediglich ein Fahrzeuginsasse in Form des Fahrers im Fahrzeug, so ergibt sich damit zwangsläufig, dass nur seine Blickrichtung ausgewertet werden kann. Aber auch bei mehreren Fahrzeuginsassen ist es besonders vorteilhaft die Blickrichtung des Fahrers zu erfassen, da dieser einerseits die Fahrzeugumgebung am aufmerksamsten betrachtet um das Fahrzeug sicher führen zu können. Ferner weiß der Fahrer in welche Richtung er das Fahrzeug lenken wird und damit auch in welcher Richtung fahrzeugexterne Objekte besonders relevant sind, weil sie beispielsweise die zukünftige Fahrzeugtrajektorie kreuzen könnten. Schließlich sind Kamerasysteme, die die Augen des Fahrers erfassen, ggfs. schon im Fahrzeug vorgesehen, um beispielsweise eine auftretende Fahrermüdigkeit zu detektieren und hierauf zu reagieren. Es kann aber auch die Blickrichtung weiterer Fahrzeuginsassen, insbesondere des Beifahrers, erfasst und erfindungsgemäß benutzt werden. Dieses kann beispielsweise dann von Nutzen sein, wenn ein fahrzeugexternes Objekt aus der Position des Fahrers teilweise oder vollständig verdeckt wird, für den Beifahrer aber besser sichtbar ist. So kann sich für den Fahrer eine Verdeckung durch weitere fahrzeugexterne Objekte wie beispielsweise Verkehrszeichen oder Ampeln oder aber auch durch Teile des Fahrzeugs wie beispielsweise die A-Säule auf der Beifahrerseite des Fahrzeugs ergeben, die dagegen für den Beifahrer aufgrund der anderen Sitzposition nicht vorliegt. Schließlich kann die Blickrichtung eines Fahrzeuginsassen aber auch ausgewertet werden, wenn sich das Fahrzeug in einem autonomen Fahrmodus befindet.

Neben Objekten in Bereichen vor oder neben dem Fahrzeug können auch Objekte erfasst werden, die sich hinter dem Fahrzeug befinden indem Blicke des Fahrers in den Rück- oder die Seitenspiegel räumlich aufgelöst erfasst und ausgewertet werden.

Die Erfindung kann in beliebigen Bereichen der Fahrzeugtechnik eingesetzt werden.

### Bezugszeichenliste

- 1: Verfahrensschritt mit Erfassung der Blickrichtung
- 2: Verfahrensschritt mit Analyse der Blickrichtung und Bestimmung eines Interessenbereichs
- 3: Verfahrensschritt mit Anpassung eines Sensor an den ermittelten Interessenbereich
- 4: Eigenfahrzeug
- 5: Erkennungsbereich der Sensorik
- 6, 7, 8: fahrzeugexterne Objekte
- 9, 10, 11: Sensoren
- 12: Auswerte- und Steuereinheit
- 13: Assistenzsystem
- 14: Kamera zur Beobachtung des Fahrzeuginsassen
- ROI: Interessenbereich

## Patentansprüche

1. Verfahren zur ortsaufgelösten Detektion von einem fahrzeugexternen Objekt (6, 7, 8) mithilfe eines in einem Fahrzeug verbauten Sensors (9, 10, 11), bei dem
- die Blickrichtung eines Fahrzeuginsassen erfasst (1) wird;
- die erfasste Blickrichtung über einen Zeitraum analysiert (2) wird und hieraus ein Interessensbereich (ROI) außerhalb des Fahrzeugs bestimmt (2) wird; und
- der Sensor (9, 10, 11) in Richtung des bestimmten Interessensbereichs (ROI) räumlich ausgerichtet (3) wird, und
- ein Konfidenzwert für einen räumlichen Bereich ermittelt wird, wobei der Konfidenzwert von der Dauer und/oder Häufigkeit der Betrachtung durch den Fahrzeuginsassen abhängt und der räumliche Bereich als ein Interessensbereich (ROI) bestimmt wird, wenn der Konfidenzwert einen Schwellwert überschreitet und wobei der Schwellwert vom physischen oder mentalen Zustand des Fahrzeuginsassen und/oder fahrzeugexternen Parametern wie Straßen-, Verkehrs- oder Wetterverhältnissen abhängt.

2. Verfahren nach Anspruch 1, wobei die Konvergenz der Augen des Fahrzeuginsassen ermittelt wird und aus der Konvergenz die räumliche Entfernung des Interessensbereichs (ROI) ermittelt wird.

3. Verfahren nach einem der vorhergehenden Ansprüche, wobei der Interessenbereich (ROI) oder ein Objekt (6, 8), dass sich in dem Interessenbereich (ROI) befindet, dem Fahrzeuginsassen durch eine Anzeige, beispielsweise durch einen projizierten Rahmens um den Interessenbereich oder das Objekt, kenntlich gemacht wird.

4. Verfahren nach einem der vorhergehenden Ansprüche, wobei die Blickrichtung des Fahrer des Fahrzeug erfasst wird.

5. Vorrichtung zur ortsaufgelösten Detektion von einem fahrzeugexternen Objekt (6, 7, 8) mithilfe eines in einem Fahrzeug verbauten ersten Sensors (9, 10, 11), mit
- einem zweiten Sensor (14) zur Erfassung der Blickrichtung eines Fahrzeuginsassen;
- einer Auswerte- und Steuereinheit (10), der Sensordaten des zweiten Sensors (14) über die erfasste Blickrichtung zugeführt werden und die die Sensordaten über einen Zeitraum analysiert und hieraus einen Interessensbereich (ROI) außerhalb des Fahrzeugs bestimmt und den ersten Sensor (9, 10, 11) so ansteuert, dass dieser in Richtung des bestimmten Interessensbereichs (ROI) räumlich ausgerichtet (3) wird, wobei ein Konfidenzwert für einen räumlichen Bereich ermittelt wird, wobei der Konfidenzwert von der Dauer und/oder Häufigkeit der Betrachtung durch den Fahrzeuginsassen abhängt und der räumliche Bereich als ein Interessensbereich (ROI) bestimmt wird, wenn der Konfidenzwert einen Schwellwert überschreitet und wobei der Schwellwert vom physischen oder mentalen Zustand des Fahrzeuginsassen und/oder fahrzeugexternen Parametern wie Straßen-, Verkehrs- oder Wetterverhältnissen abhängt.

6. Vorrichtung nach Anspruch 5, wobei der erste Sensor (9, 10, 11) ein auf das Fahrzeugumfeld ausgerichteter Kamera-, Radar-, Lidar- oder Ultraschallsensor ist und der zweite Sensor (14) ein im Fahrzeug auf den Fahrzeuginsassen ausgerichteter Kamerasensor ist.

7. Vorrichtung nach Anspruch 5 oder 6, wobei eine Anzeigevorrichtung, beispielsweise ein Head-Up-Display, in dem Fahrzeug angeordnet ist mittels der der Interessenbereich (ROI) oder ein Objekt (6, 8), dass sich in dem Interessenbereich (ROI) befindet, dem Fahrzeuginsassen kenntlich gemacht wird.

8. Kraftfahrzeug, das eine Vorrichtung gemäß einem der Ansprüche 5 bis 7 aufweist oder eingerichtet ist, ein Verfahren gemäß einem der Ansprüche 1 bis 4 auszuführen.

## Claims

1. Method for the spatially resolved detection of an object (6, 7, 8) external to the vehicle using a sensor (9, 10, 11) installed in a vehicle, in which
- the viewing direction of a vehicle occupant is detected (1);
- the detected viewing direction is analyzed (2) over a period of time, and from this a region of interest (ROI) outside the vehicle is determined (2); and
- the sensor (9, 10, 11) is spatially aligned (3) in the direction of the specific region of interest (ROI), and
- a confidence value is determined for a spatial region, wherein the confidence value depends on the duration and/or frequency of viewing by the vehicle occupant and the spatial region is determined as a region of interest (ROI) if the confidence value exceeds a threshold value, and wherein the threshold value depends on the physical or mental state of the vehicle occupant and/or vehicle-external parameters such as road, traffic or weather conditions.

2. Method according to claim 1, wherein the convergence of the eyes of the vehicle occupant is determined and the spatial distance of the region of interest (ROI) is determined from the convergence.

3. Method according to either of the preceding claims, wherein the region of interest (ROI) or an object (6, 8) located in the region of interest (ROI) is made known to the vehicle occupant by a display, for example by a projected frame around the region of interest or the object.

4. Method according to any of the preceding claims, wherein the viewing direction of the driver of the vehicle is detected.

5. Device for the spatially resolved detection of an object (6, 7, 8) external to the vehicle using a first sensor (9, 10, 11) installed in a vehicle, the device comprising
- a second sensor (14) for detecting the viewing direction of a vehicle occupant;
- an evaluation and control unit (10) to which sensor data from the second sensor (14) about the detected viewing direction are fed and which analyses the sensor data over a period of time, determines a region of interest (ROI) outside the vehicle from this, and controls the first sensor (9, 10, 11) such that it is spatially aligned (3) in the direction of the determined region of interest (ROI), wherein a confidence value is determined for a spatial region, wherein the confidence value depends on the duration and/or frequency of viewing by the vehicle occupant, and the spatial region is determined as a region of interest (ROI) if the confidence value exceeds a threshold value, and wherein the threshold value depends on the physical or mental state of the vehicle occupant and/or vehicle-external parameters such as road, traffic or weather conditions.

6. Device according to claim 5, wherein the first sensor (9, 10, 11) is a camera, radar, lidar or ultrasonic sensor directed toward the vehicle surroundings and the second sensor (14) is a camera sensor directed toward the vehicle occupant in the vehicle.

7. Device according to claim 5 or 6, wherein a display device, for example a head-up display, is arranged in the vehicle, by means of which the region of interest (ROI) or an object (6, 8) located in the region of interest (ROI) is made known to the vehicle occupant.

8. Motor vehicle which has a device according to any of claims 5 to 7 or is designed to execute a method according to any of claims 1 to 4.

## Revendications

1. Procédé de détection à résolution spatiale d'un objet (6, 7, 8) extérieur à un véhicule à l'aide d'un capteur (9, 10, 11) monté dans un véhicule, dans lequel
- la direction de regard d'un occupant de véhicule est acquise (1) ;
- la direction de regard acquise est analysée (2) sur une période de temps et, à partir de là, une zone d'intérêt (ROI) à l'extérieur du véhicule est déterminée (2) ; et
- le capteur (9, 10, 11) est orienté spatialement (3) en direction de la zone d'intérêt (ROI) déterminée, et
- une valeur de confiance est déterminée pour une zone spatiale, dans lequel la valeur de confiance dépend de la durée et/ou de la fréquence de l'observation par l'occupant de véhicule et la zone spatiale est déterminée comme une zone d'intérêt (ROI) lorsque la valeur de confiance dépasse une valeur seuil et dans lequel la valeur seuil dépend de l'état physique ou mental de l'occupant de véhicule et/ou de paramètres extérieurs au véhicule tels que des conditions routières, de circulation ou météorologiques.

2. Procédé selon la revendication 1, dans lequel la convergence des yeux de l'occupant de véhicule est déterminée et la distance spatiale de la zone d'intérêt (ROI) est déterminée à partir de la convergence.

3. Procédé selon l'une des revendications précédentes, dans lequel la zone d'intérêt (ROI) ou un objet (6, 8) qui se trouve dans la zone d'intérêt (ROI) est signalé(e) à l'occupant de véhicule par un affichage, par exemple par un cadre projeté autour de la zone d'intérêt ou de l'objet.

4. Procédé selon l'une des revendications précédentes, dans lequel la direction de regard du conducteur du véhicule est acquise.

5. Dispositif de détection à résolution spatiale d'un objet (6, 7, 8) extérieur à un véhicule à l'aide d'un premier capteur (9, 10, 11) monté dans un véhicule, comportant
- un second capteur (14) pour acquérir la direction de regard d'un occupant de véhicule ;
- une unité d'évaluation et de commande (10), à laquelle sont amenées des données de capteur du second capteur (14) sur la direction de regard acquise et qui analyse les données de capteur sur une période de temps et détermine à partir de là une zone d'intérêt (ROI) à l'extérieur du véhicule et commande le premier capteur (9, 10, 11) de telle sorte que celui-ci soit orienté (3) spatialement en direction de la zone d'intérêt (ROI) déterminée, dans lequel une valeur de confiance est déterminée pour une zone spatiale, dans lequel la valeur de confiance dépend de la durée et/ou de la fréquence de l'observation par l'occupant de véhicule et la zone spatiale est déterminée comme une zone d'intérêt (ROI) lorsque la valeur de confiance dépasse une valeur seuil et dans lequel la valeur seuil dépend de l'état physique ou mental de l'occupant de véhicule et/ou de paramètres extérieurs au véhicule tels que des conditions routières, de circulation ou météorologiques.

6. Dispositif selon la revendication 5, dans lequel le premier capteur (9, 10, 11) est un capteur à caméra, à radar, à lidar ou à ultrasons orienté vers l'environnement de véhicule et le second capteur (14) est un capteur à caméra orienté dans le véhicule vers l'occupant de véhicule.

7. Dispositif selon la revendication 5 ou 6, dans lequel un dispositif d'affichage, par exemple un affichage tête haute, est agencé dans le véhicule par le biais duquel la zone d'intérêt (ROI) ou un objet (6, 8) qui se trouve dans la zone d'intérêt (ROI) est signalé(e) à l'occupant de véhicule.

8. Véhicule automobile, qui présente un dispositif selon l'une des revendications 5 à 7 ou qui est conçu pour exécuter un procédé selon l'une des revendications 1 à 4.
